# EUROPÄISCHE PATENTSCHRIFT

(11) **EP 4 263 159 B1**
(45) Veröffentlichungstag und Bekanntmachung des Hinweises auf die Patenterteilung: **21.01.2026**
(21) Anmeldenummer: 21782456.4
(22) Anmeldetag: 17.09.2021
(51) Int. Cl.: B26D 1/16, B26D 3/16, B26D 7/26, B29C 48/00

(54) **TRENNEINRICHTUNG ZUM ABTRENNEN VON EXTRUDIERTEN KUNSTSTOFFPROFILEN**
CUTTING DEVICE FOR SEPARATING EXTRUDED PLASTIC PROFILES
DISPOSITIF DE COUPE POUR SÉPARER DES PROFILÉS EN MATIÈRE PLASTIQUE EXTRUDÉS

(30) Priorität: 16.12.2020 DE 102020133873
(43) Veröffentlichungstag der Anmeldung: 25.10.2023
(73) Patentinhaber: battenfeld-cincinnati Germany GmbH, 32547 Bad Oeynhausen (DE)
(72) Erfinder: DOHMANN, Heinrich, 32547 Bad Oeynhausen (DE); HUS, Tobias, 32312 Lübbecke (DE)
(86) Internationale Anmeldenummer: PCT/EP2021/075702
(87) Internationale Veröffentlichungsnummer: WO 2022/128186

(56) Entgegenhaltungen:
- DE-A1- 102007 053 476
- DE-A1- 102018 114 474
- DE-A1- 3 418 686
- DE-B- 1 286 382

## Beschreibung

Die Erfindung betrifft eine Vorrichtung zum Abtrennen von Kunststoffprofilen die entlang einer Extrusionsachse extrudiert werden, mindestens umfassend: Ein an einem Werkzeugträger angeordnetes Werkzeug, einen Schwenkarm, mittels dem der Werkzeugträger mit dem Werkzeug auf die Extrusionsachse zu und von dieser wegbewegbar ist, einer Einrichtung zum Schwenken des Schwenkarmes, wobei das Werkzeug mit dem Werkzeugträger und dem Schwenkarm verbunden ist, wobei der Schwenkarm an der Einrichtung zum Schwenken angeordnet ist, wobei die Einrichtung zum Schwenken ein elektromechanischer Antrieb ist, sowie ein diesbezügliches Verfahren.

Aus dem Stand der Technik sind Trenneinrichtungen bekannt.

Die DE 10 2007 053 476 A1 offenbart eine Vorrichtung zum Ablängen eines extrudierten Profiles, vorzugsweise eines Rohres, die mindestens zwei Antriebe, ein feststehendes Gehäuse, eine am Gehäuse drehbar angeordnete Aufnahmetrommel und eine Trennvorrichtung umfasst, wobei die Trennvorrichtung an der Aufnahmetrommel angeordnet ist und mittels einem der Antriebe um das extrudierte Profil rotierbar ist.

Erfindungsgemäß ist dabei vorgesehen, dass die beiden Antriebe außerhalb der drehbaren Aufnahmetrommel und am feststehenden Gehäuse fixiert sind.

Aus der DE 10 2018 114 474 A1 ist eine Vorrichtung zum Ablängen eines extrudierten Kunststoffrohres mittels einer Trennvorrichtung und um die Extrusionsachse des extrudierten Rohres rotierbaren Trenneinheit bekannt, wobei die Trenneinheit drehbar gelagert ist und das Trennen mit an der Trenneinheit angeordneten Schneidwerkzeugen erfolgt, wobei zum Bewegen der Schneidwerkzeuge Energie übertragbar ist, wofür Elemente zur Energieübertragung an bewegte Teile angeordnet sind die mit auf eine in der Trenneinheit angeordneten rotierenden Aufnahmeeinheit in Wirkverbindung stehen.

Erfindungsgemäß ist dabei vorgesehen, dass zusätzlich mindestens eine elektrische Komponenten an der rotierenden Aufnahmeeinheit angebracht ist über die die Energie und Steuerbefehle an mindestens eine elektromechanische Einheit zum Verfahren von mindestens einem Träger und daran angeordnetem Schneidwerkzeug weitergegeben werden, wobei der Raum den die elektromechanische Einheiten, der Träger und das daran angeordnete Schneidwerkzeug umfasst, kleiner baut als eine für die gleiche Krafterzeugung erforderliche hydraulische Einheit, wobei die elektromechanische Einheiten, der Träger oder das Schneidwerkzeug so angeordnet ist, dass einer Kraft entgegen der Trennkraft ausgewichen werden kann, sofern diese Kraft größer ist als die benötigte Trennkraft.

Das gesamte System ist somit in der Lage bei einer Überlast auszuweichen, um Beschädigungen zu vermeiden. Das kann erforderlich sein, wenn beispielsweise eine Unrundung im Kunststoffrohr vorliegt.

Es kann aber nicht gezielt einen bestimmten Trennablauf wiedergeben und somit das Trennwerkzeug nicht mit unterschiedlicher Vorschubgeschwindigkeit auf das Kunststoffprofil zu oder von diesem wegbewegen.

**Aufgabe** der Erfindung ist es, bekannte Trenneinrichtungen derart weiterzubilden, dass diese kleiner bauen und weniger Bauteile umfassen, weiterhin liegt die Aufgabe darin, eine präzisere Positionierung des Trennwerkzeuges zu ermöglichen und nach einem Stopp die Positionierung beizubehalten.

Die **Lösung** der Aufgabe ist in Verbindung mit dem Oberbegriff des Anspruches 1 dadurch gekennzeichnet, dass der elektromechanische Antrieb mindestens ein Zykloidgetriebe umfasst.

Der große Vorteil ein Zykloidgetriebe einzusetzen, ist seine extrem robuste interne Getriebelagerung. Es ist somit möglich in der erfindungsgemäßen Vorrichtung dies auch mit als Drehlagerung für den Trennarm der Trennvorrichtung zu nutzen. Es können so die Kosten und der Platz (Bauraum), für eine zusätzliche Lagerung des Trennarmes, minimiert bzw. eingespart werden.

Vorteilhafterweise besteht der elektromechanische Antrieb aus mindestens einem Zykloidgetriebe, einem Winkelgetriebe und einem Servomotor.

Weiterbildungsgemäß ist vorgesehen, dass mehrere Einrichtungen zum Schwenken mit daran angeordnetem Schwenkarm mit Werkzeugträger und Werkzeug um die Extrusionsachse angeordnet sind.

Durch eine so ausgestaltete Trenneinrichtung wird eine kleiner bauende Vorrichtung angeboten, wodurch mehrere Trennwerkzeuge (mehr als zwei) als im Stand der Technik bekannt, auf einer Vorrichtung untergebracht werden können. Durch den Einsatz des elektromechanischen Antriebes wird eine präzise Positionierung ermöglicht. Zusätzlich wird erreicht, dass beispielsweise nach einem Anhalten des Schwenkarmes dessen Position gehalten werden kann, was bei hydraulischen Systemen unter Umständen aufgrund von Druckaufbau nicht sichergestellt ist.

Vorteilhafterweise ist das Werkzeug über eine Verstellung, auf eine im rechten Winkel zur Extrusionsachse liegende Ebene, ausrichtbar.

Gemäß einer Fortbildung ist das Werkzeug im Werkzeughalter mittels einer Schnellspannung befestigt. Diese Schnellspannung kann ein Exzenter oder eine Bolzenverbindung sein. In jedem Fall ist sichergestellt, dass die Verbindung sehr genau toleriert ist, wodurch eine gute Passform sichergestellt wird. Um den Verschleiß dieser Teile zu minimieren werden die betreffenden Teile gehärtet.

Die **Lösung** bezüglich des Verfahrens ist im Anspruch 8 dargestellt. Vorteilhafte Weiterbildungen sind in den Unteransprüchen wiedergegeben.

Das erfindungsgemäße Verfahren ermöglicht die elektromotorische Zustellung der Werkzeuge neben der präzisen Positionierung auch hohe Flexibilität bei der Einstellung der Vorschubgeschwindigkeiten. So ist es zum Beispiel denkbar, dass zum Beispiel ein Messer zunächst langsamer in das abzutrennende Kunststoffrohr eintaucht, damit die Messerklinge nicht verläuft. Sobald das Messer tief genug im Kunststoffrohr eingetaucht ist und nicht mehr verlaufen kann, kann die Geschwindigkeit wieder erhöht werden. Kurz bevor das Messer auf der Innenseite des Kunststoffrohres durchbricht, kann die Geschwindigkeit wieder reduziert werden, um einen sogenannten Weißbruch oder andere Arten von Ausbrüchen aus dem Material (z.B. wegen sprödem Material) zu vermeiden.

In den Zeichnungen wird schematisch eine erfindungsgemäße Vorrichtung gezeigt:
- Fig. 1: zeigt eine typische Extrusionslinie
- Fig. 2: den Stand der Technik einer Trenneinheit
- Fig. 3: die erfindungsgemäße Trenneinheit
- Fig. 4: eine perspektivische Ansicht gemäß Figur 3
- Fig. 5 bis 11: verschiedene Ansichten des Schwenkarmes

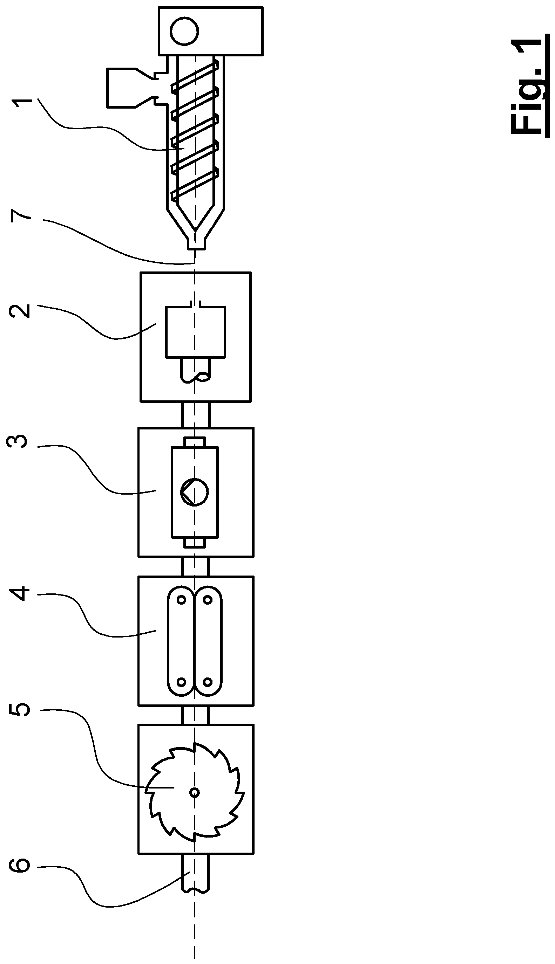

Figur 1 zeigt eine typische Extrusionslinie, wie sie heute für die Profilextrusion, egal, ob für die Produktion von Fensterprofilen oder Rohren, zum Einsatz kommt. Sie zeigt einen Extruder 1, in dem Kunststoff aufgeschmolzen wird, und kontinuierlich zur Formgebung ins Extrusionswerkzeug 2 gefördert wird. Daran schließt sich eine Kalibrier- und Kühlstation 3 an, je nach Profil können weitere Kühlstationen eingesetzt werden. Nach den Kühlstationen schließt sich eine Abzugsvorrichtung 4 an. Um die Endlosprofile 6 auf die gewünschte Länge abzuschneiden, ist anschließend eine Trennvorrichtung 5 angeordnet. Die Extrusionsachse ist mit der Positionsziffer 7 gekennzeichnet.

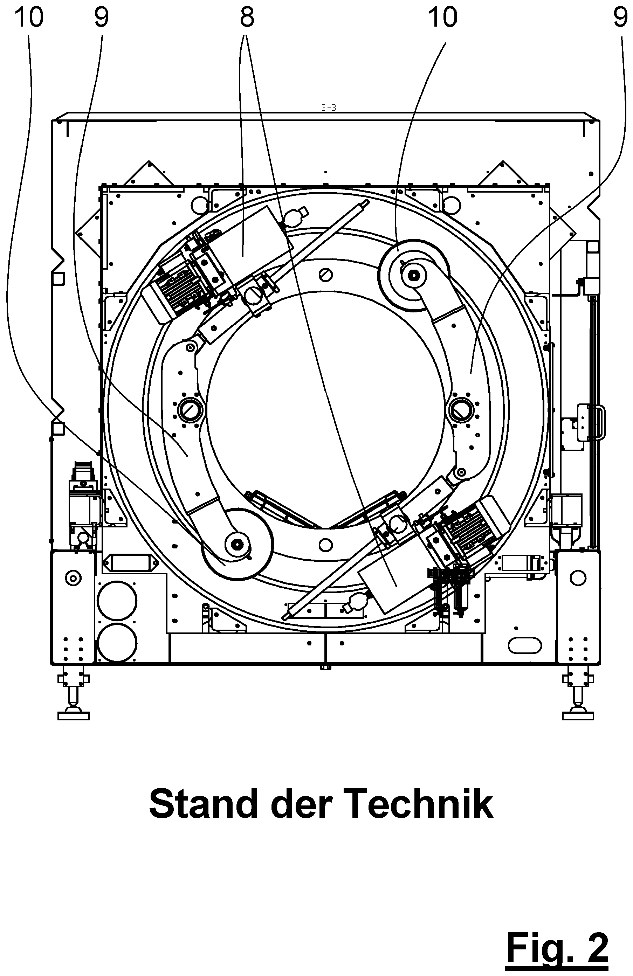

Figur 2 zeigt den bekannten Stand der Technik bei dem auf einer um die Extrusionsachse drehbaren Scheibe zwei hydraulische Systeme 8 angeordnet sind über die zwei Schwenkarme 9 mit daran angeordneten Werkzeugen 10 zum Abtrennen auf die Extrusionsachse zu oder von dieser wegbewegt werden können.

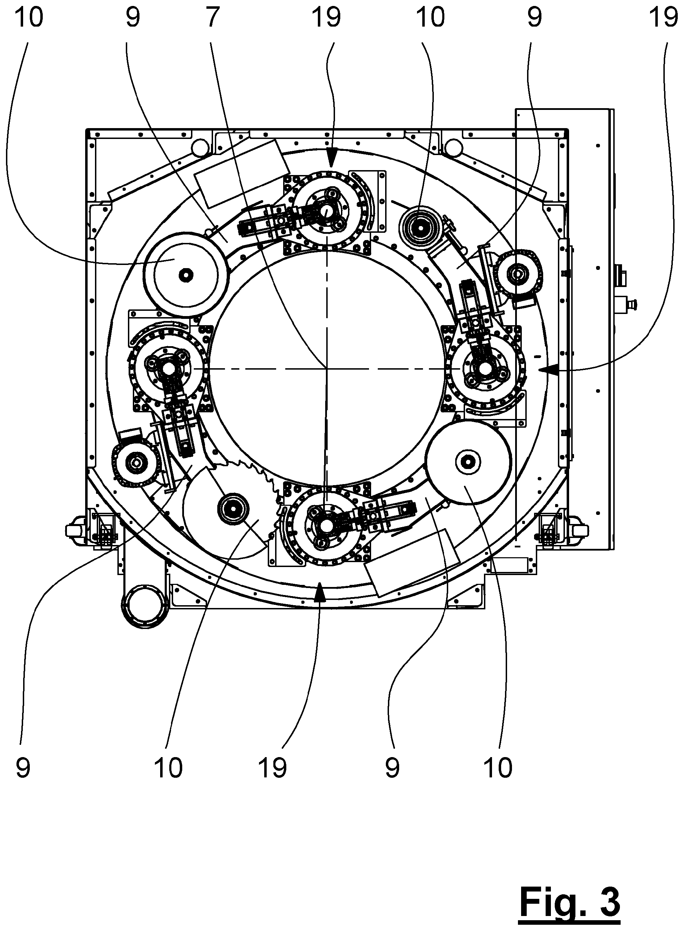

Figur 3 zeigt die erfindungsgemäße Vorrichtung. Auch hier sind Einrichtungen zum Schwenken 19 auf einer um die Extrusionsachse 7 drehbaren Scheibe angeordnet. An einem Schwenkarm 9 angeordnete Werkzeuge 10, werden über diese Antriebe in Richtung der Extrusionsachse 7 geschwenkt. Die Einrichtungen zum Schwenken 19 sind in diesem Fall aber elektromechanische Antriebe. Schwenkarm und Antrieb bauen wesentlich kleiner, sodass, wie in diesem Beispiel, diese Einheiten viermal auf der drehbaren Scheibe angeordnet sind. Wie aus der bildlichen Darstellung zu entnehmen, können die eingesetzten Werkzeuge 10 unterschiedlich sein. Einmal ist es hier ein mit Zähnen versehenes Sägeblatt, einmal, ähnlich eines Pizza-Schneiders, ein rundes Schneidmesser oder ein Werkzeug mittels dem beispielsweise eine Fase eingebracht werden kann.

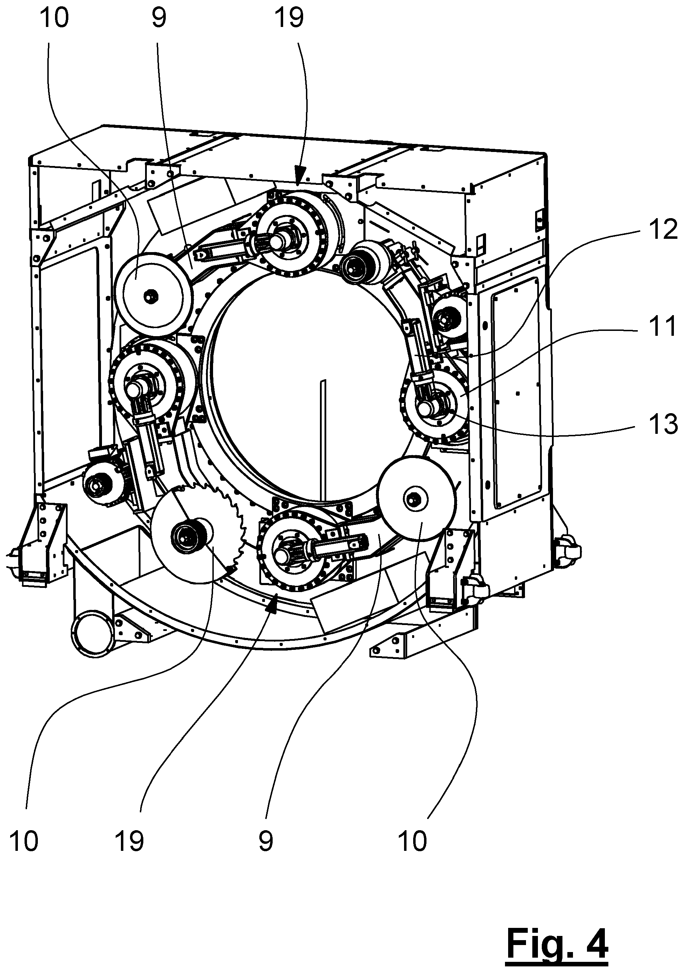

Figur 4 zeigt die Figur 3 in einer perspektivischen Darstellung, wobei gleiche Positionen wieder mit den gleichen Positionsziffern unter Bezug genommen werden. Bedingt durch die Perspektive, können weitere Teile der Einrichtung zum Schwenken 19 verdeutlicht werden, sodass das Zykloidgetriebe 11, der Servomotor 12 und das Winkelgetriebe 13 zu sehen sind.

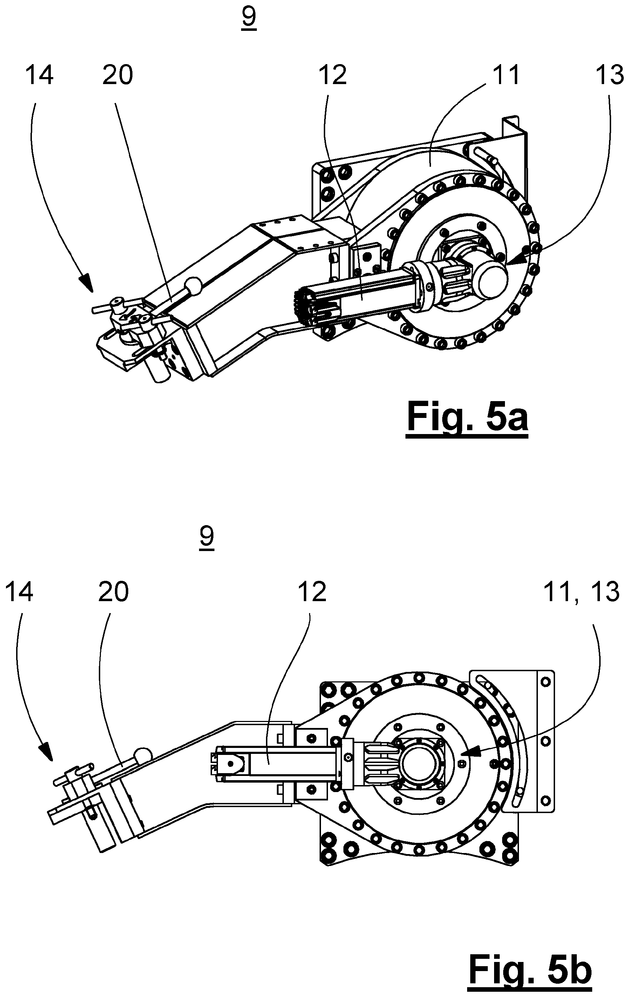

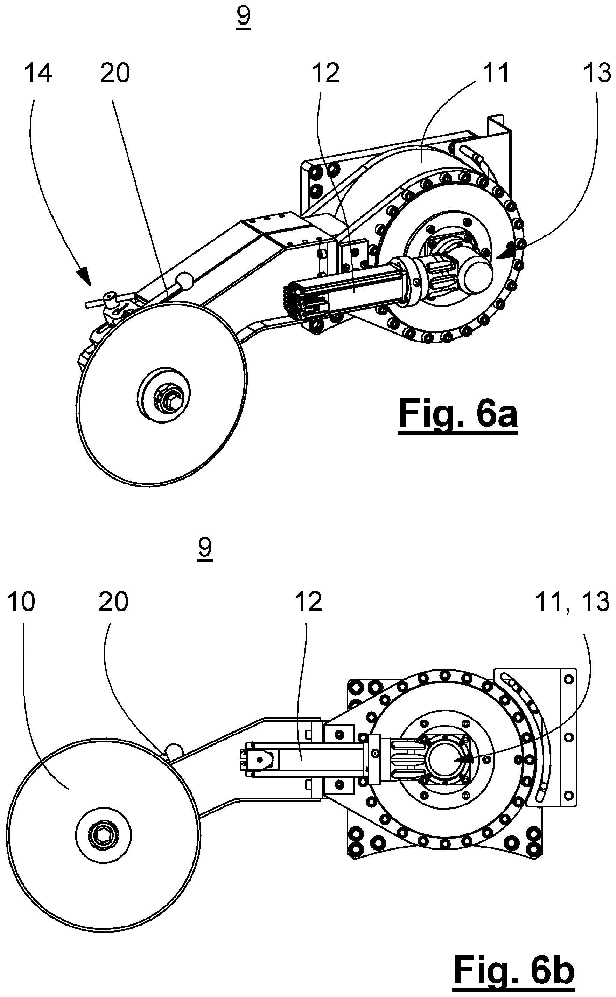

Figur 5 zeigt den Schwenkarm 9 mit dem Zykloidgetriebe 11, dem Servomotor 12 und dem Winkelgetriebe 13, weiterhin ist der Werkzeugträger 14 mit einer Schnellspanneinrichtung 20 zu sehen. Ein am Schwenkarm 9 angeordnetes Werkzeug 10, ist in der Figur 6 wiedergegeben.

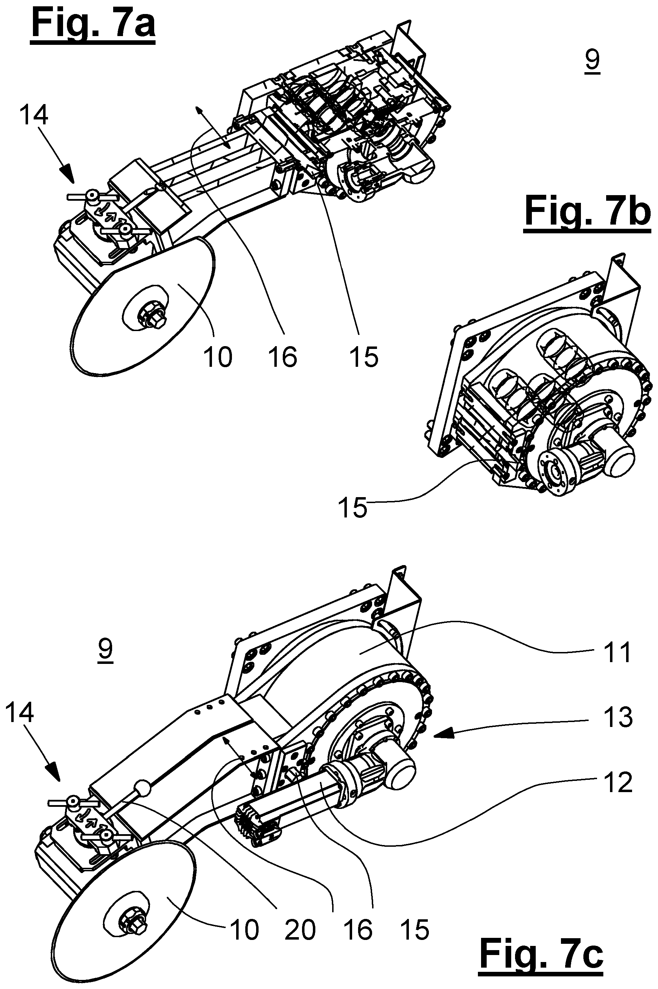

In den Darstellungen gemäß Figur 7 ist der Schwenkarm 9 mit dem Werkzeugträger 14 und dem Werkzeug 10, teilweise in einer Schnittdarstellung, wiedergegeben. Hierdurch wird, durch den Pfeil in Figur 7a gezeigten Verstellrichtung 16, eine Verstellung des Werkzeugträgers 14 in Richtung der Extrusionsachse verdeutlicht. Über die Verstellung 15, hier eine Gewindespindel mit Sechskant, kann das Verstellen umgesetzt werden. Der Mechanismus dient zum Ausrichten mehrerer Werkzeuge zueinander. Dies kann beispielweise erforderlich sein, wenn Toleranzabweichungen der Bauteile vorliegen. Es können so alle Bauteile auf eine Ebene, die senkrecht zur Extrusionsachse liegt, ausgerichtet werden und somit ein sauberer Trennvorgang aller angeordneten Trennwerkzeuge sichergestellt werden. Figur 7b zeigt die Aufhängung an Gleitschienen und die Spindel für die Verstellung im Einzelnen und Figur 7c den kompletten Schwenkarm 9.

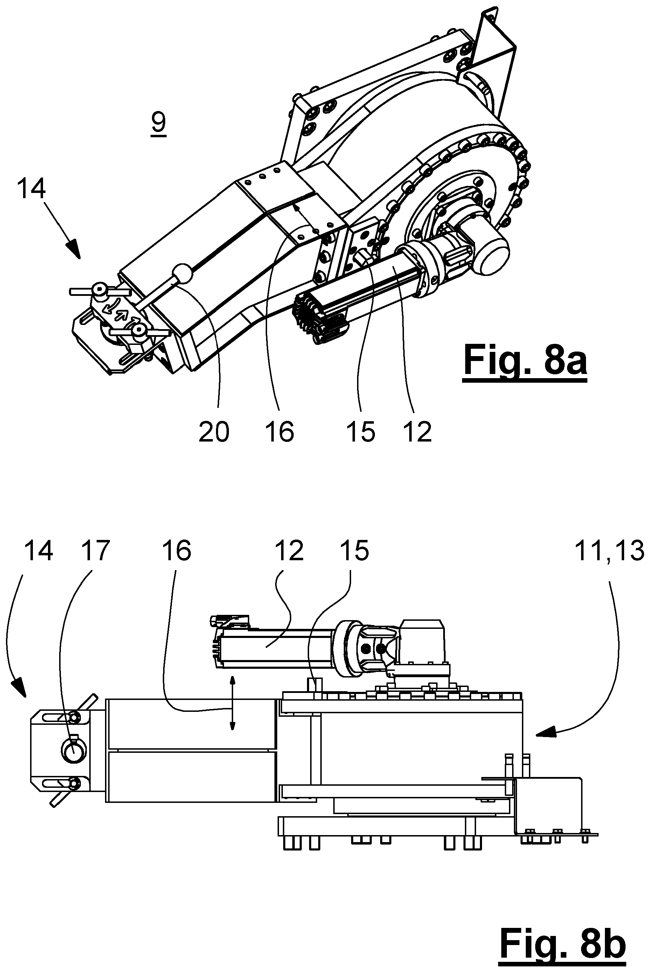

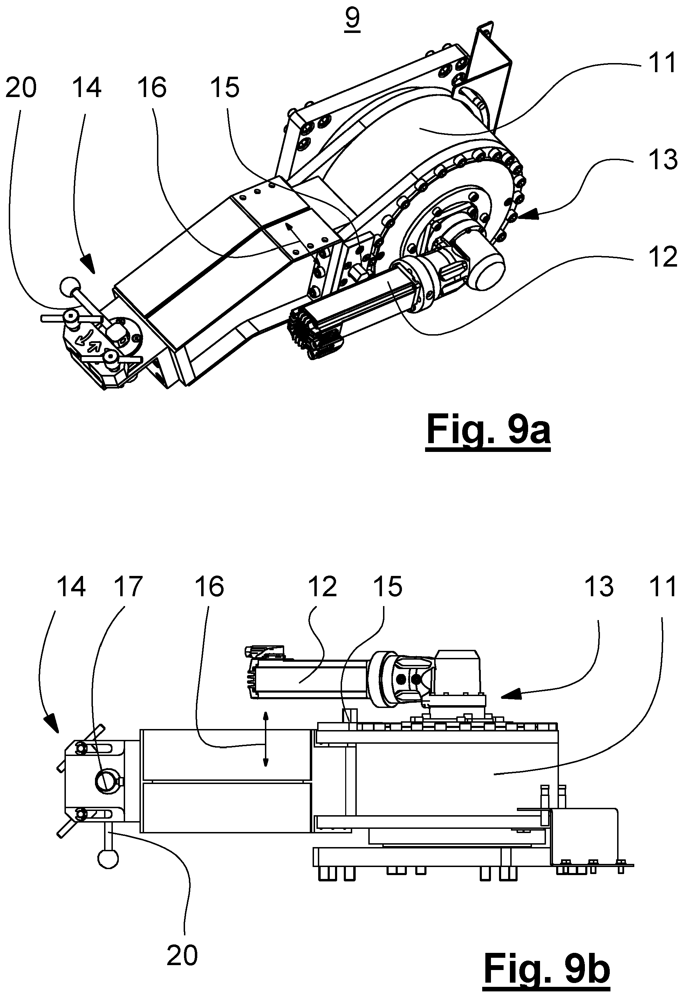

In der Figur 8 ist die Verbindungsmöglichkeit von Werkzeug 10 und Werkzeugträger 14 hervorgehoben. Über eine Schnellspannung 20 wird ein Exzenter 17 betätigt, der das einmal über die Stellschrauben fixierte Werkzeug 10 auch nach einem Lösen wieder in die exakt identische Position bringt. Die beiden unterschiedlichen Positionen der Schnellspannung 20 sind in den Figuren 8 bzw. der Figur 9 dargestellt.

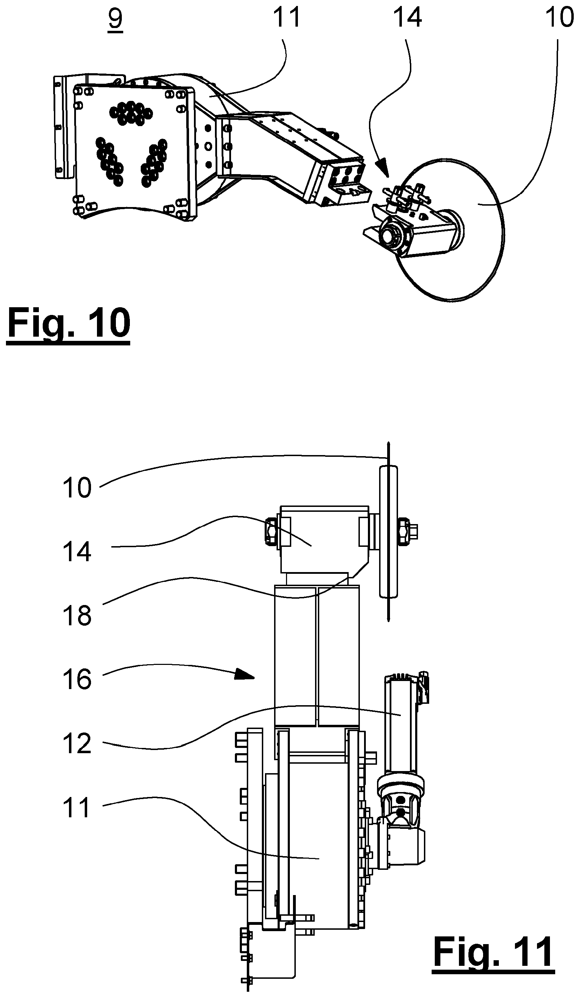

Die Figur 10 zeigt eine alternative Verbindung des Werkzeugträgers 14 mit dem Schwenkarm 9. Hier wurde auf die Schnellspannung verzichtet und durch Festlegung von genauen Fertigungstoleranzen eine exakte Positionierung sichergestellt.

Die Ansicht gemäß Figur 11 verdeutlicht noch einmal im Einzelnen, dass der Werkzeugträger 14 eine Anschlagkante 18 aufweist über die eine exakte Positionierung des Werkzeugträgers 14 zusätzlich sichergestellt wird.

### Bezugszeichenliste:

- 1: Extruder
- 2: Extrusionswerkzeug
- 3: Kalibrier- und Kühltank
- 4: Abzugsvorrichtung
- 5: Trennvorrichtung
- 6: Profil
- 7: Extrusionsachse
- 8: Hydraulisches System
- 9: Schwenkarm
- 10: Werkzeug
- 11: Zykloidgetriebe
- 12: Servomotor
- 13: Winkelgetriebe
- 14: Werkzeugträger
- 15: Verstellung für 14
- 16: Verstellrichtung
- 17: Exzenter
- 18: Anschlagkante an 14
- 19: Einrichtung zum Schwenken
- 20: Schnellspannung

## Patentansprüche

1. Vorrichtung zum Abtrennen von Kunststoffprofilen die entlang einer Extrusionsachse (7) extrudiert werden, mindestens umfassend: ein an einem Werkzeugträger (14) angeordnetes Werkzeug (10), einen Schwenkarm (9), mittels dem der Werkzeugträger (14) mit dem Werkzeug (10) auf die Extrusionsachse (7) zu und von dieser wegbewegbar ist, einer Einrichtung (19) zum Schwenken des Schwenkarmes (9), wobei das Werkzeug (10) mit dem Werkzeugträger (14) und dem Schwenkarm (9) verbunden ist, wobei der Schwenkarm (9) an der Einrichtung (19) zum Schwenken angeordnet ist, wobei die Einrichtung (19) zum Schwenken ein elektromechanischer Antrieb ist, **dadurch gekennzeichnet, dass** der elektromechanische Antrieb mindestens ein Zykloidgetriebe (11) umfasst.

2. Vorrichtung nach Anspruch 1, **dadurch gekennzeichnet, dass** der elektromechanische Antrieb aus mindestens einem Zykloidgetriebe (11), einem Winkelgetrieben (12) und einem Servomotor (12) besteht.

3. Vorrichtung nach Anspruch 1 oder 2, **dadurch gekennzeichnet, dass** mehrere Einrichtungen (19) zum Schwenken mit daran angeordnetem Schwenkarm (10) mit Werkzeugträger (14) und Werkzeug (10) um die Extrusionsachse (7) angeordnet sind.

4. Vorrichtung nach Anspruch 3, **dadurch gekennzeichnet, dass** das Werkzeug (10) über eine Verstellung (15), auf eine im rechten Winkel zur Extrusionsachse (7) liegende Ebene, ausrichtbar ist.

5. Vorrichtung nach einem der Ansprüche 1 bis 4, **dadurch gekennzeichnet, dass** das Werkzeug (10) im Werkzeughalter (14) mittels einer Schnellspannung (20) befestigt ist.

6. Vorrichtung nach Anspruch 5, **dadurch gekennzeichnet, dass** die Schnellspannung (20) ein Exzenter (17) ist.

7. Vorrichtung nach Anspruch 5, **dadurch gekennzeichnet, dass** die Schnellspannung (20) eine Bolzenverbindung ist.

8. Verfahren zum Abtrennen von Kunststoffprofilen die entlang einer Extrusionsachse (7) extrudiert werden, wobei zum Abtrennen eine Vorrichtung nach Anspruch 1 verwendet wird, wobei mittels einer Steuerung ein Schwenken der Einrichtung (19) zum Schwenken gesteuert wird, wobei dadurch die Vorschubgeschwindigkeit mit der das Werkzeug (10) radial auf das abzutrennende Profil (6) zugeführt und durch dieses hindurch geführt wird, beeinflusst wird, wobei die Vorschubgeschwindigkeit des Schwenkens durch einen Grafen abgebildet wird.

9. Verfahren nach Anspruch 8, **dadurch gekennzeichnet, dass** die Vorschubgeschwindigkeit eine Geradengleichung oder eine Staffelung mehrerer Gradengleichungen ist.

10. Verfahren nach Anspruch 8, **dadurch gekennzeichnet, dass** die Vorschubgeschwindigkeit zunächst ansteigt, bis das Werkzeug (10) den äußeren Bereich des Profils erreicht hat, dann abflacht, bis das Werkzeug (10) eine vorgegebene Eindringtiefe erreicht hat und dann bis zum Abschluss des Trennvorganges wieder ansteigt.

## Claims

1. Device for cutting off plastic profiles that are extruded along an extrusion axis (7), comprising at minimum: a tool (10) arranged on a tool carrier (14), a swivel arm (9) that can move the tool carrier (14)
with the tool (10) toward the extrusion axis (7) and away from it, a device (19) for swivelling the swivel arm (9), whereby the tool (10) is connected with the tool carrier (14) and the swivel arm (9), whereby the swivel arm (9) is arranged on the device (19) for swivelling, whereby the device (19) for swivelling is an electromechanical drive, **characterised in**
**that** the electromechanical drive comprises at least one cycloidal gear (11).

2. Device according to claim 1, **characterised in that** the electromechanical drive consists of at least one cycloidal gear (11), an angular gear (12) and a servo motor (12).

3. Device according to claim 1 or 2, **characterised in that** multiple units (19) for swivelling with an attached swivel arm (10) with tool carrier (14) and tool (10) are arranged around the extrusion axis (7).

4. Device according to claim 3, **characterised in that** the tool (10) can be aligned by means of an adjustment (15) along a plane arranged at a right angle to the extrusion axis (7).

5. Device according to one of the claims 1 to 4, **characterised in that** the tool (10) is fastened in the tool holder (14) by a quick-release clamp (20).

6. Device according to claim 5, **characterised in that** the quick-release clamp (20) is an eccentric (17).

7. Device according to claim 5, **characterised in that** the quick-release clamp (20) is a bolt connection.

8. Process for cutting plastic profiles that are extruded along an extrusion axis (7), whereby a device according to claim 1 is used for cutting, whereby a control system controls a swivelling motion of the device (19) for swivelling, whereby this influences the feed speed at which the
tool (10) radially approaches the profile (6) that is being cut and is guided through it, whereby the feed speed of swivelling is visualised by a curve.

9. Process according to claim 8, **characterised in that** the feed speed is a linear equation or a scaling of multiple linear equations.

10. Process according to claim 8, **characterised in that** the feed speed initially increases until the tool (10) has reached the outer section of the profile, then levels off until the tool (10) has reached a pre-defined immersion depth, then increases again at the end of the cutting process.

## Revendications

1. Dispositif pour couper des profilés en matière plastique qui sont extrudés le long d'un axe d'extrusion (7), comprenant au moins : un outil (10) disposé sur un porte-outil (14), un bras pivotant (9) au moyen duquel le porte-outil (14)
avec l'outil (10) peut être déplacé vers l'axe d'extrusion (7) et éloigné de celui-ci, un dispositif (19) pour faire pivoter le bras pivotant (9), l'outil (10) étant relié au porte-outil (14) et au bras pivotant (9), le bras pivotant (9) étant disposé sur le dispositif (19) pour pivoter, le dispositif (19) pour pivoter étant un entraînement électromécanique, **caractérisé**
**en ce que** l'entraînement électromécanique comprend au moins un engrenage cycloïdal (11).

2. Dispositif selon la demande 1, **caractérisé en ce que** l'entraînement électromécanique se compose d'au moins un engrenage cycloïdal (11), d'un engrenage conique (12) et d'un servomoteur (12).

3. Dispositif selon la demande 1 ou 2, **caractérisé en ce que** plusieurs dispositifs (19) destinés à pivoter, avec un bras pivotant (10) disposé dessus, avec un porte-outil (14) et un outil (10), sont disposés autour de l'axe d'extrusion (7).

4. Dispositif selon la demande 3, **caractérisé en ce que** l'outil (10) peut être aligné, à l'aide d'un dispositif de réglage (15), sur un plan perpendiculaire à l'axe d'extrusion (7).

5. Dispositif selon l'une des demandes 1 à 4, **caractérisé en ce que** l'outil (10) est fixé dans le porte-outil (14) au moyen d'un dispositif de serrage rapide (20).

6. Dispositif selon la demande 5, **caractérisé en ce que** le dispositif de serrage rapide (20) est un excentrique (17).

7. Dispositif selon la demande 5, **caractérisé en ce que** le serrage rapide (20) est une liaison à boulon.

8. Procédé pour tronçonner des profilés en matière plastique qui sont extrudés le long d'un axe
d'extrusion (7), dans lequel on utilise pour le tronçonnage un dispositif selon la demande 1, dans lequel on commande au moyen d'une commande le pivotement du dispositif (19) destiné au pivotement, ce qui influence la vitesse d'avance avec laquelle
l'outil (10) est amené radialement sur le profilé à tronçonner (6) et guidé à travers celui-ci, la vitesse d'avance du pivotement étant représentée par un graphique.

9. Procédé selon la demande 8, **caractérisé en ce que** la vitesse d'avance est une équation linéaire ou une gradation de plusieurs équations linéaires.

10. Procédé selon la demande 8, **caractérisé en ce que** la vitesse d'avance augmente d'abord jusqu'à ce que l'outil (10) ait atteint la zone extérieure du profilé, puis se stabilise jusqu'à ce que l'outil (10) ait atteint une profondeur de pénétration prédéfinie, puis augmente à nouveau jusqu'à la fin de l'opération de tronçonnage.
